# EUROPEAN PATENT APPLICATION

(11) **EP 4 825 764 A1**
(43) Date of publication of application: **21.10.2026**
(21) Application number: 24903324.2
(22) Date of filing: 17.10.2024
(51) Int. Cl.: B65G 47/24

(54) **ARTICLE ALIGNMENT MECHANISM AND BLOOD COLLECTION TUBE SORTING DEVICE**

(30) Priority: 11.12.2023 JP 2023208439
(71) Applicant: Hitachi High-Tech Corporation, Minato-ku Tokyo 105-6409 (JP)
(72) Inventor: MORI Shotaro, Tokyo 100-8280 (JP); SHIBATA Toru, Tokyo 100-8280 (JP); FUNATSU Terunobu, Tokyo 105-6409 (JP); TOMIYAMA Tomoko, Tokyo 105-6409 (JP)
(74) Representative: MERH-IP Matias Erny Reichl Hoffmann Patentanwälte PartG mbB
(86) International application number: PCT/JP2024/036936
(87) International publication number: WO 2025/126661

(57) **Abstract**

To provide an article alignment mechanism that aligns articles in random postures at high speed while being less likely to cause blockage. The present disclosure provides the article alignment mechanism for aligning articles each having a first diameter portion having a predetermined diameter and a second diameter portion having a diameter smaller than that of the first diameter portion, the article alignment mechanism comprising an article holding section having a groove for supporting the first diameter portion and holding the article in a predetermined posture in which the second diameter portion fits; a groove input section into which a plurality of the articles in a scattered state are introduced and which changes the posture of the articles and introduces the articles into the groove; and an extrusion conveyance section that presses the articles introduced from the groove input section into the article holding section, thereby changing the posture of the articles that are not in the predetermined posture and pushing the articles held in the groove to a position outside the groove input section.

## Description

### Technical Field

The present disclosure relates to an article alignment mechanism and a blood collection tube sorting device.

### Background Art

Conventionally, blood has been collected into blood collection tubes in hospitals and similar facilities. The collected blood collection tubes are sorted according to the type of test. In recent years, apparatuses have been developed that automate the sorting of blood collection tubes. In such apparatuses, from the perspective of reducing human workload, it is desirable that blood collection tubes can be directly introduced into the apparatus in random postures (scattered state). In apparatuses that process articles in random postures, the articles in random postures are first aligned into a predetermined orientation or posture.

As a technique for aligning articles in random postures into a predetermined orientation or posture, a technique described in Patent Document 1 is known. Patent Document 1 describes a pipette tip setting machine that can automatically set pipette tips onto a tip rack. Patent Document 1 further describes: "A stocker 2 that houses a plurality of pipette tips A in an accumulated state is provided in the machine body, and a bucket conveyor 3 that scoops up and conveys one or several pipette tips A at a time is arranged upright such that its lower end side is located at the bottom of the stocker and its upper end side is positioned above the stocker. At the discharge side of the upper end of the bucket conveyor, there is provided a funnel-shaped hopper 4 having, at the bottom thereof, a slit-shaped opening with a width into which the small-diameter portion below the fitting portion of the head of the pipette tip fits, and a conveying rail 5 including a pair of vibrating rails is installed below the opening thereof, and the pipette tips A are supplied to the tip rack B from the end side, in the conveying direction, of the conveying rail." (see Abstract of Patent Document 1).

### Citation List

### Patent Literature

Patent Literature 1: Japanese Unexamined Patent Application Publication No. 2000-19182

### Summary of Invention

### Technical Problem

However, when a plurality of pipette tips (articles) are introduced into the slit-shaped opening as in Patent Document 1, the small-diameter portion below the fitting portion of the head may fail to fit into the slit-shaped opening, resulting in blockage. If the rotation of the bucket conveyor is reduced in order to avoid the articles being introduced simultaneously, the processing speed decreases.

Accordingly, the present disclosure provides an article alignment mechanism that aligns articles in random postures at high speed while being less likely to cause blockage.

### Solution to Problem

In order to solve the above problem, the present disclosure provides an article alignment mechanism for aligning articles each having a first diameter portion having a predetermined diameter and a second diameter portion having a diameter smaller than that of the first diameter portion, the article alignment mechanism including an article holding section having a groove for supporting the first diameter portion and holding the articles in a predetermined posture in which the second diameter portion fits; a groove input section into which a plurality of the articles in a scattered state are introduced and which changes the posture of the articles and introduces the articles into the groove; and an extrusion conveyance section that presses the articles introduced from the groove input section into the article holding section, thereby changing the posture of the articles in the posture different from the predetermined posture and pushing the articles held in the groove to a position outside the groove input section.

Further features concerning the disclosure will be clarified from the content of this description and the accompanying drawings. Moreover, aspects of the present disclosure are achieved and realized by elements, combinations of various elements, and aspects of the following detailed description and the appended claims. The description in the present specification is merely an illustrative example and does not limit the scope or applications of the present disclosure in any way.

### Advantageous Effects of Invention

Accordingly, an article alignment mechanism of the present disclosure can align articles in random postures at high speed while being less likely to cause blockage. Other objects, configurations, and effects will become apparent from the following description of embodiments.

### Brief Description of Drawings

[FIG. 1] FIG. 1 is a perspective view of an article alignment mechanism of the first embodiment.
[FIG. 2] FIG. 2 is a top view of the article alignment mechanism of the first embodiment.
[FIG. 3] FIG. 3 is a side cross-sectional view in the vicinity of the groove input section of the article alignment mechanism.
[FIG. 4] FIG. 4 is a side view showing a blood collection tube to be aligned by the article alignment mechanism.
[FIG. 5] FIG. 5 is a perspective view of an extrusion prevention section.
[FIG. 6] FIG. 6 is a bottom view of the extrusion prevention section.
[FIG. 7] FIG. 7 is a perspective view of the article alignment mechanism 1 showing a blood collection tube fitted in the groove and passing through the extrusion prevention section.
[FIG. 8] FIG. 8 is a perspective view showing a reversely oriented blood collection tube unable to pass through the extrusion prevention section.
[FIG. 9] FIG. 9 is a perspective view showing a sideways-oriented blood collection tube resting on a blood collection tube fitted in the groove and unable to pass through the extrusion prevention section.
[FIG. 10] FIG. 10 is a bottom view in the state of FIG. 9.
[FIG. 11] FIG. 11 is a perspective view of the article alignment mechanism 1 showing transported blood collection tubes aligned in the groove.
[FIG. 12] FIG. 12 is a perspective view of the article alignment mechanism showing a state in which two blood collection tubes are introduced substantially perpendicular to the groove and close to each other.
[FIG. 13] FIG. 13 is a side cross-sectional view in the vicinity of the groove input section showing a state in which the blood collection tube is placed on the roller when introduced in a direction perpendicular to the groove.
[FIG. 14] FIG. 14 is a front cross-sectional view of the groove input section showing a state in which another blood collection tube is placed on the blood collection tube and the upper blood collection tube is not fitted in the groove.
[FIG. 15] FIG. 15 is a front cross-sectional view of the groove input section showing a state in which another blood collection tube is placed on the blood collection tube and the upper blood collection tube is not fitted in the groove.
[FIG. 16] FIG. 16 shows a control sequence for the driving directions of the extrusion conveyance section, the roller, and the belt conveyor.

### Description of Embodiments

Hereinafter, one embodiment of the present disclosure will be described with reference to the drawings. In each figure, common members are denoted by the same reference numerals.

### [First Embodiment]

### <Configuration Example of Article Alignment Mechanism>

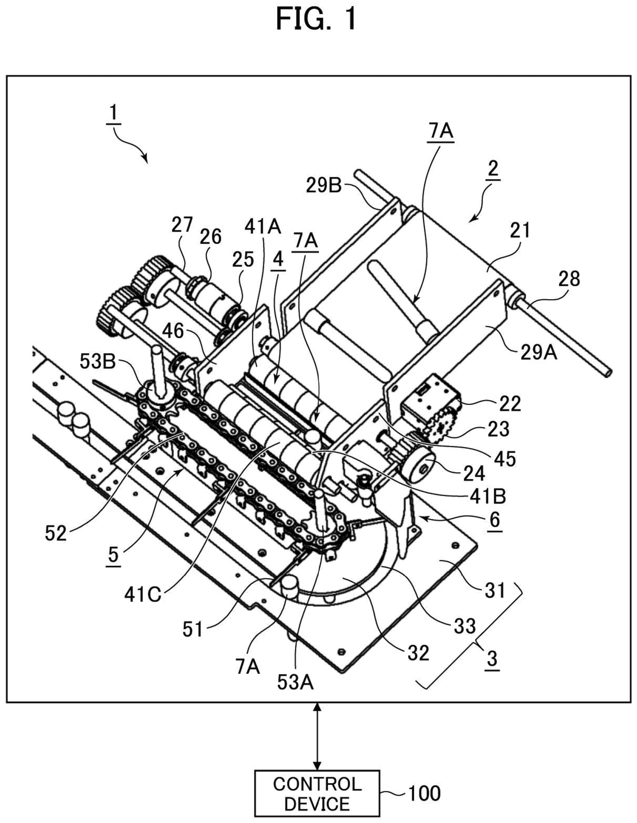

FIG. 1 is a perspective view of an article alignment mechanism 1 of the first embodiment. As shown in FIG. 1, the article alignment mechanism 1 includes an article input section 2, an article holding section 3, a groove input section 4, an extrusion conveyance section 5, and an extrusion prevention section 6. Articles such as blood collection tubes 7A are introduced into the article input section 2 in random postures (scattered state). The article input section 2 conveys the blood collection tube 7A to the groove input section 4. The groove input section 4 changes the posture of the blood collection tube 7A and introduces it into the article holding section 3. The extrusion conveyance section 5 conveys the blood collection tube 7A held in the article holding section 3 by pressing it. The blood collection tube 7A held in the article holding section 3 is aligned in a uniform posture. The extrusion prevention section 6 is fixed to the article holding section 3. The extrusion prevention section 6 allows the blood collection tube 7A held in an appropriate predetermined posture in the article holding section 3 to pass through. The article alignment mechanism 1 is connected to a control device 100. The control device 100 controls the driving of various actuators of the article alignment mechanism 1.

The article input section 2 includes a belt conveyor 21, a conveyor actuator 22, conveyor gears 23 and 24, a conveyor connection timing pulley 25, a torque limiter 26, a conveyor drive shaft 27, a conveyor driven shaft 28, conveyor side walls 29A and 29B.

The article holding section 3 includes a groove outer plate 31 and a groove inner plate 32. The groove outer plate 31 and the groove inner plate 32 are fixedly connected to a base (not shown). A predetermined spacing exists between the groove outer plate 31 and the groove inner plate 32, forming a groove 33. The groove 33 has a substantially U shape. The blood collection tube 7A has a structure wherein the diameter of the upper portion (cap) is larger than the diameter of the lower portion (container portion). The width of the groove 33 is smaller than the diameter of the upper portion of the blood collection tube 7A and larger than the diameter of the lower portion of the blood collection tube 7A. Thereby, the bottom surface of the upper portion of the blood collection tube 7A is supported by the groove outer plate 31 and the groove inner plate 32, and the lower portion of the blood collection tube 7A fits into the groove 33. In the present disclosure, the term "groove" simply refers to the gap between the groove outer plate 31 and the groove inner plate 32, and the groove 33 serves as a conveyance path for the blood collection tube 7A. Alternatively, a path having a bottom may be formed, in which case the depth of the path having a bottom is larger than the length of the container portion of the blood collection tube 7A.

The groove input section 4 includes rollers 41A, 41B and 41C, side walls 45 and 46. Below the rollers 41A, 41B and 41C, the groove 33 extends substantially parallel to the axial direction of the rollers 41A, 41B and 41C.

The conveyor actuator 22, the conveyor side walls 29A and 29B, and the side walls 45 and 46 are fixedly connected to a base (not shown). The conveyor drive shaft 27 is rotatably connected to the side walls 45 and 46, and the conveyor driven shaft 28 is rotatably connected to the base. The belt conveyor 21 is wound around the conveyor drive shaft 27 and the conveyor driven shaft 28. The conveyor gear 23 is connected to the output shaft of the conveyor actuator 22 and further meshes with the conveyor gear 24. The conveyor gear 24 and the conveyor drive shaft 27 are fixedly connected and rotate in synchronization. Therefore, by driving the conveyor actuator 22, the conveyor drive shaft 27 rotates, and the belt conveyor 21 is driven. The conveyor actuator 22 is a servo-controlled DC motor, but is not limited thereto, and may be, for example, a stepping motor.

The conveyor connection timing pulley 25 is rotatably connected to the conveyor drive shaft 27, and the torque limiter 26 is fixedly connected to the conveyor drive shaft 27. The torque limiter 26 is connected to the conveyor connection timing pulley 25 and slips when a predetermined torque is exceeded, thereby preventing transmission of excessive torque.

The extrusion conveyance section 5 includes elastic portions 51, a chain 52, sprockets 53A and 53B. The sprockets 53A and 53B are rotatably connected to a base (not shown). The chain 52 is wound around and connected to the sprocket 53A. A plurality of elastic portions 51 are provided and fixedly connected to the chain 52 at intervals. A drive actuator (not shown) is connected to the sprocket 53A, and the elastic portions 51 are moved via the chain 52. At this time, the elastic portions 51 move so as to pass over the upper side of the groove 33. The elastic portion 51 is an elastic body that deforms when subjected to a force, and therefore does not apply excessive force to articles such as blood collection tubes 7A. As the elastic portion 51, for example, a thin polyacetal resin plate having a thickness of 0.5 mm can be used. However, the elastic portion 51 is not limited thereto, and may be, for example, another elastic material. Further, the elastic portion 51 may have a configuration including an iron plate and a spring-loaded hinge or the like so as to deform when subjected to a force.

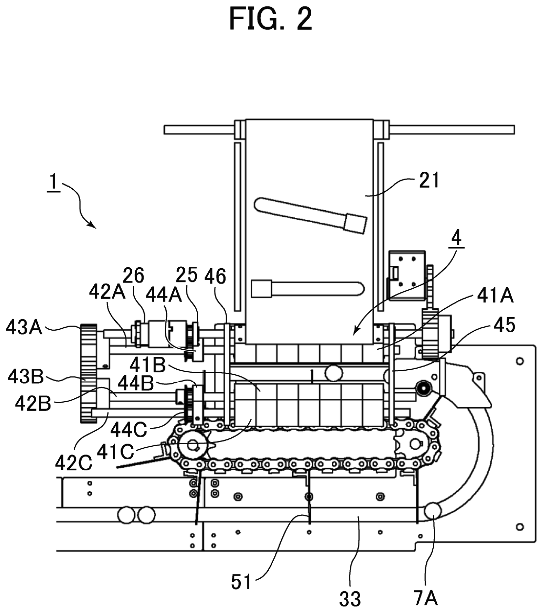

FIG. 2 is a top view of the article alignment mechanism 1 of the first embodiment. As shown in FIG. 2, the groove input section 4 includes rollers 41A, 41B and 41C, roller shafts 42A, 42B and 42C, roller connection gears 43A and 43B, roller connection timing pulleys 44A, 44B and 44C. The roller shafts 42A, 42B and 42C are rotatably connected to the side walls 45 and 46. The roller 41A, the roller shaft 42A, the roller connection gear 43A, and the roller connection timing pulley 44A are fixedly connected. A roller 41B, a roller shaft 42B, a roller connection gear 43B, and a roller connection timing pulley 44B are fixedly connected. The roller 41C, the roller shaft 42C, and the roller connection timing pulley 44C are fixedly connected. The roller connection gears 43A and 43B mesh with each other, and the roller connection timing pulleys 44B and 44C are connected by a timing belt (not shown). The roller connection timing pulley 44A and the conveyor connection timing pulley 25 are connected by a timing belt (not shown).

With such a configuration, the rollers 41A, 41B, and 41C rotate in synchronization. When the torque does not exceed the predetermined torque of the torque limiter 26, the belt conveyor 21 also rotates in synchronization. At this time, the belt conveyor 21 and the roller 41A rotate in the same direction, while the rollers 41B and 41C rotate in the opposite direction. The maximum torque transmitted to the rollers 41A, 41B, and 41C is limited by the torque limiter 26. When torque exceeding a predetermined value is applied to any of the rollers 41A, 41B, and 41C, the torque limiter 26 and the conveyor connection timing pulley 25 slip, the belt conveyor 21 continues to rotate, but the rollers 41A, 41B, and 41C stop. Although an example in which the belt conveyor 21 and the rollers 41A, 41B, and 41C are operated by a single actuator has been shown, the present disclosure is not limited thereto, and they may be driven by two or more actuators.

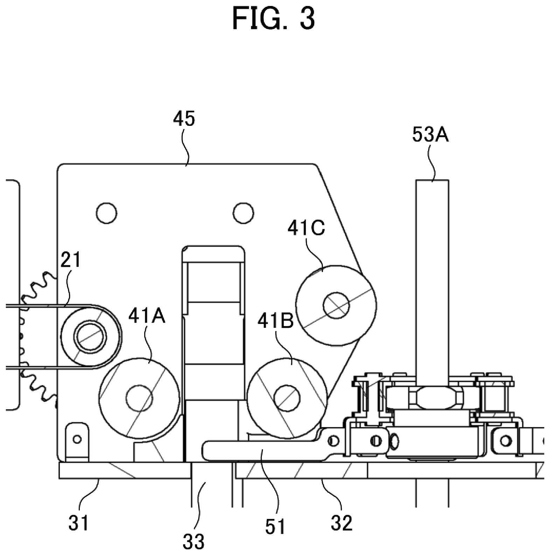

FIG. 3 is a side cross-sectional view in the vicinity of the groove input section of the article alignment mechanism. As shown in FIG. 3, an elastic portion 51 is disposed above the groove 33, and the rollers 41A, 41B, and 41C are disposed above the elastic portion 51. However, the present disclosure is not limited to such a configuration. For example, the elastic portion 51 may be disposed below the groove 33, or may be disposed on both the upper and lower sides of the groove 33.

The number of rollers in the groove input section 4 is not limited to three. It is sufficient that a roller is provided on each side of the groove 33 (that is, above the groove outer plate 31 and above the groove inner plate 32). Alternatively, the belt conveyor 21 may be used in place of the roller 41A. In this case, the belt conveyor 21 is installed such that an end of the belt conveyor 21 is positioned at the location of the roller 41A in FIG. 3. By adopting such a configuration, the number of parts is reduced and the structure becomes simpler.

### <Article Alignment Mechanism to be Aligned>

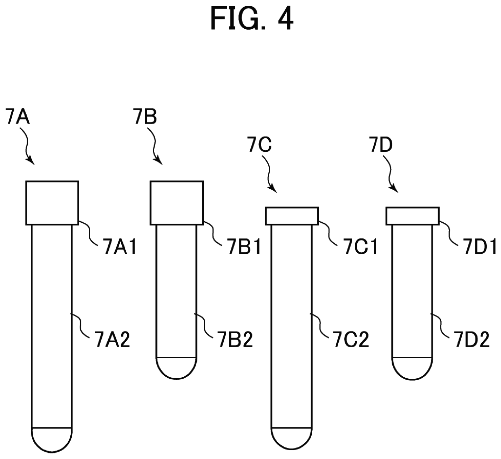

FIG. 4 is a side view showing the blood collection tubes 7A, 7B, 7C and 7D to be aligned by the article alignment mechanism 1. The blood collection tube 7A includes a cap 7A1 (first diameter portion) and a container portion 7A2 (second diameter portion). The cap 7A1 and container portion 7A2 are both cylindrical in shape, but the cap 71A has a larger diameter than the container portion 7A2. For example, the diameter of the cap 7A1 is 16 mm, and the diameter of the container portion 7A2 is 12.5 mm. The width of the groove 33 is narrower than the diameter of the cap 7A1 and wider than the diameter of the container portion 7A2. When the blood collection tube 7A having such dimensions is to be aligned, the width of the groove 33 is designed to be, for example, 13.5 mm. Accordingly, as shown in FIG. 1, the blood collection tube 7A can be held by fitting the container portion 7A2 into the groove 33 and resting the cap 7A1 on the groove outer plate 31 and the groove inner plate 32. At this time, the center of gravity of the blood collection tube 7A is biased toward the container portion 7A2, and the posture of the blood collection tube 7A is maintained by gravity such that the container portion 7A2 is on the lower side and the cap 7A1 is on the upper side.

The article alignment mechanism 1 can handle not only blood collection tubes 7A but also various types of blood collection tubes. As shown in FIG. 4, there are various types of blood collection tubes, such as blood collection tubes 7B, 7C, and 7D. The blood collection tubes 7B, 7C, and 7D include caps 7B1, 7C1, and 7D1, and container portions 7B2, 7C2, and 7D2, respectively, similar to the blood collection tube 7A. Although the lengths in the longitudinal direction differ, the diameters of the caps 7B1, 7C1, and 7D1 are equivalent to the diameter of the cap 7A1. The container portions 7B2, 7C2, and 7D2 have different longitudinal lengths, but their diameters are equivalent to the diameter of the container portion 7A2. Therefore, the blood collection tubes 7B, 7C, and 7D can also be fitted into the groove 33 in the same manner as the blood collection tube 7A.

In the case of a blood collection tube having a container portion with a diameter different from that of the container portion 7A2 (the diameter being larger than the width of the groove 33), it cannot be handled in the same groove 33. Therefore, by designing the width of the groove 33 in accordance with the type of blood collection tube to be aligned, blood collection tubes of various diameters can be handled. In the first embodiment, the blood collection tube 7A is basically used as a representative example of a blood collection tube. However, unless otherwise specified, the technology of the present embodiment can be similarly applied to the other blood collection tubes 7B, 7C, and 7D.

Although it has been described that the blood collection tube 7A is handled as an article to be aligned by the article alignment mechanism 1, the present disclosure is not limited thereto. Articles having a large-diameter portion and a small-diameter portion, such as blood collection tubes, can be handled in a similar manner as long as they are shaped such that the small-diameter portion fits into the groove 33 so that the article stands upright. Examples of articles to be aligned include cuvettes, pipette tips, dispensing tips, sample cups, measurement containers, and the like. Various dimensions of the article alignment mechanism 1 are designed in accordance with the articles to be handled. For example, the width of the groove 33 is designed to be slightly larger than the small-diameter portion of the articles to be handled.

However, when attempting to align multiple types of articles having significantly different diameters using a single article alignment mechanism, they cannot be handled by a single groove. In such a case, the article alignment mechanism can be provided with multiple types of grooves having different widths, and a mechanism for sorting articles by type can be provided. Further, by configuring the system to direct articles to appropriate grooves according to the type of article, articles having various diameters can also be handled by a single article alignment mechanism. For articles that cannot be aligned by grooves or articles outside the scope, other means may be combined, such as aligning them using a robot arm and gripper or excluding them.

### <Configuration Example of Extrusion Prevention Section>

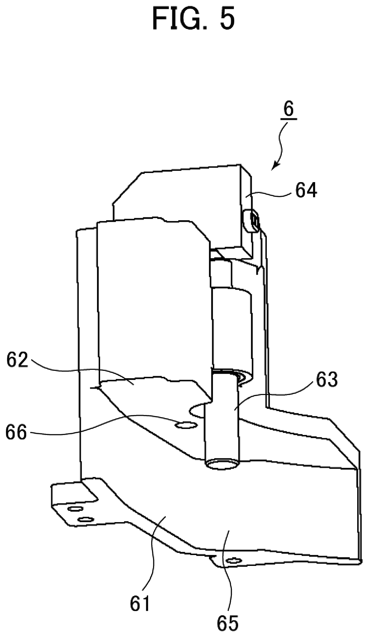

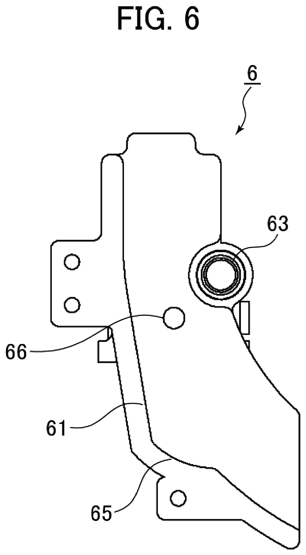

FIG. 5 is a perspective view of the extrusion prevention section 6. FIG. 6 is a bottom view of the extrusion prevention section 6. As shown in FIGS. 5 and 6, the extrusion prevention section 6 includes a side wall 61, an upper wall 62, an side shaft 63, a detection sensor 64, a rear side wall 65, and a hole 66. The side wall 61 and the rear side wall 65 constitute a continuous curved wall. The side wall 61 and the rear side wall 65 are positioned on the groove outer plate 31. The side shaft 63 projects downward from the upper wall 62 and is positioned above the groove inner plate 32. The side shaft 63 has a bearing (not shown) and is configured to be rotatable.

The detection sensor 64 is, for example, a transmission-type photoelectric sensor. The detection sensor 64 emits light in a downward direction. Light from the detection sensor 64 is directed into the interior of the extrusion prevention section 6 through the hole 66 and toward a position below the groove 33. A photoelectric sensor light-receiving unit (not shown) is provided below the groove 33 and detects light emitted by the detection sensor 64. Thereby, the presence or absence of a blood collection tube within the extrusion prevention section 6 can be detected. The control device 100 receives a detection signal from the detection sensor 64 and controls the drive of the article alignment mechanism 1 based on the detection signal.

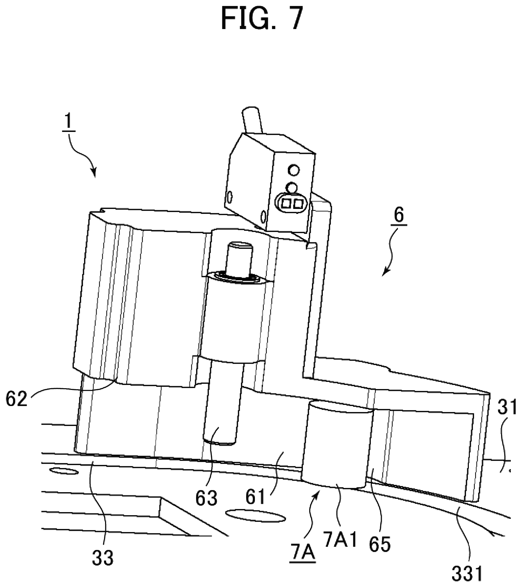

FIG. 7 is a perspective view of the article alignment mechanism 1 showing a blood collection tube 7A fitted in the groove 33 and passing through the extrusion prevention section 6. As shown in FIG. 7, the extrusion prevention section 6 is fixed to the upper surface of the groove outer plate 31 such that a slight gap exists between the groove 33 and the side wall 61 where the bottom surface of the cap 7A1 rests. Thus, when the blood collection tube 7A is held in the groove 33 in an appropriate predetermined posture (an upright posture in which the container portion is positioned below the groove 33), the blood collection tube 7A passes through without contacting the extrusion prevention section 6. Therefore, the blood collection tube 7A can pass through without any problem. The groove 33 includes a partially curved groove 331. Since the elastic portion 51 also passes along the curved groove 331, the blood collection tube 7A can also pass through the curved groove 331. In this manner, the extrusion prevention section 6 allows only a blood collection tube 7A that fits into the groove 33 to pass through. Hereinafter, several examples will be described in which a blood collection tube 7A that does not fit into the groove 33 cannot pass through the extrusion prevention section 6.

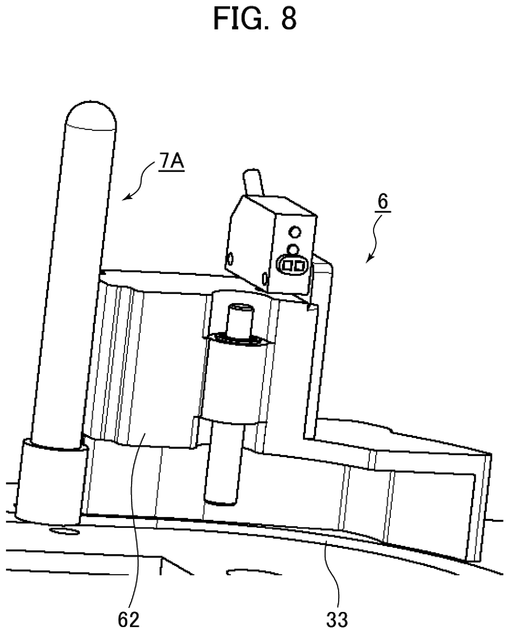

FIG. 8 is a perspective view showing the reversely oriented blood collection tube 7A unable to pass through the extrusion prevention section 6. As shown in FIG. 8, when the blood collection tube 7A is oriented in the reverse direction, it is blocked by the upper wall 62, and therefore cannot pass through the extrusion prevention section 6. Similarly, the blood collection tube 7A cannot pass through even when in an oblique state.

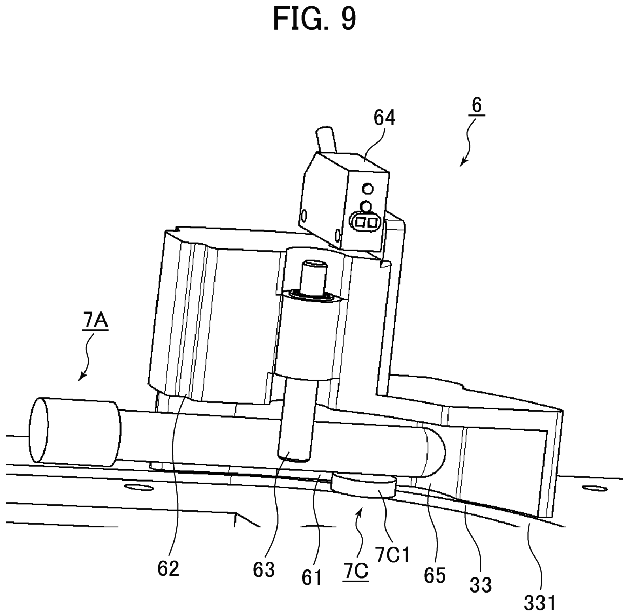

FIG. 9 is a perspective view showing the sideways-oriented blood collection tube 7A resting on a blood collection tube 7C fitted in the groove 33 and unable to pass through the extrusion prevention section 6. As shown in FIG. 9, when a blood collection tube 7A rests on a blood collection tube 7C having a low-height cap 7C1 and the blood collection tube 7A does not fit into the groove 33, passage cannot be blocked by the upper wall 62, and the blood collection tube 7A enters the interior of the extrusion prevention section 6.

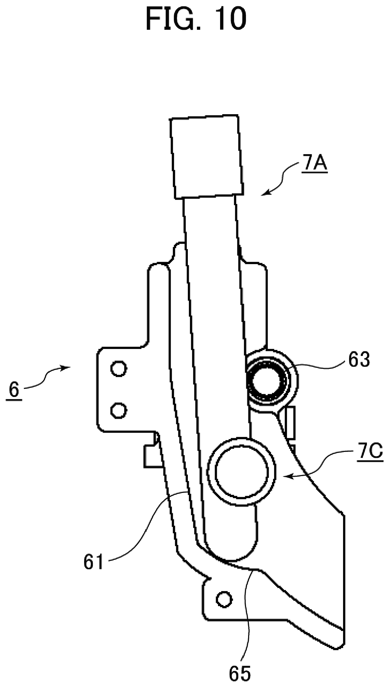

FIG. 10 is a bottom view in the state of FIG. 9. As shown in FIG. 10, the blood collection tube 7A is blocked by the side shaft 63 and the rear side wall 65 and cannot follow the curve, and therefore cannot pass through the extrusion prevention section 6.

Although an example has been described in which the groove 33 is a curved path with a constant radius of curvature like the curved groove 331, the present disclosure is not limited thereto. For example, even if the groove 33 is S-shaped, the laterally-oriented blood collection tube 7A cannot pass through. However, when the curved groove 331 has an arc with constant curvature as in the first embodiment, it is easy for the elastic portion 51 to move along the curved groove 331.

The state in which the blood collection tube is advancing laterally, as shown in FIGS. 9 and 10, can be detected by the detection sensor 64. When the control device 100 detects that the blood collection tube has entered laterally, the control device 100 can return the blood collection tube 7A to the inlet of the groove input section 4 by driving the extrusion conveyance section 5 in the reverse direction. The specific control flow will be described later.

As shown in FIG. 9, the inner side wall of the extrusion prevention section 6 is configured by a combination of the side wall 61, the side shaft 63, and the rear side wall 65. Alternatively, a structure may be employed wherein a side wall simply having a shape along the curved groove 331 is attached to the groove inner plate 32 and the groove outer plate 31. Even with such a structure, it is possible to prevent the laterally-oriented blood collection tube 7A from passing through. However, in that case, there is a possibility that the blood collection tube 7A may become pinched between the inner and outer side walls, or may become difficult or impossible to withdraw due to frictional force. On the other hand, in the extrusion prevention section 6 of the first embodiment, the side wall 61 is linear at the introduction section, but curves sharply inward from the middle and becomes the rear side wall 65. The blood collection tube 7A that has entered comes into contact with the rear side wall 65. Since the side wall 61 is curved inward, the aforementioned pinching and frictional force are less likely to occur. Further, the extrusion prevention section 6 of the first embodiment includes a side shaft 63 on the inside, and the side shaft 63 includes a bearing, so the rotational frictional force is very small. Therefore, as shown in FIG. 10, when the blood collection tube 7A enters laterally and is pushed back by the extrusion conveyance section 5, almost no frictional force that impedes the push-back is generated.

### <Flow of Aligning Article>

Next, the flow of aligning articles in random postures by the article alignment mechanism 1 will be described. First, as shown in FIG. 1, blood collection tubes are introduced from the article input section 2 in random postures. The blood collection tubes may be introduced into the article input section 2 by an operator, or may be introduced by a conveyance mechanism (not shown) such as a belt conveyor. The introduced blood collection tubes are placed on the belt conveyor 21 and conveyed to the groove input section 4. As a simple example, as shown in FIG. 1, a case is assumed in which the longitudinal direction of the blood collection tube 7A placed on the belt conveyor 21 is substantially parallel to the groove 33 and there is a certain amount of spacing between the blood collection tube 7A and other blood collection tubes 7A. At this time, the blood collection tubes 7A are introduced one by one into the groove input section 4, and each blood collection tube 7A stands upright in the groove 33 with the cap 7A1 facing upward. Then, the elastic portion 51 of the extrusion conveyance section 5 moving along the groove 33 pushes the cap 7A1 of the standing blood collection tube 7A, and the blood collection tube 7A passes through the extrusion prevention section 6 and is pushed out from the groove input section 4.

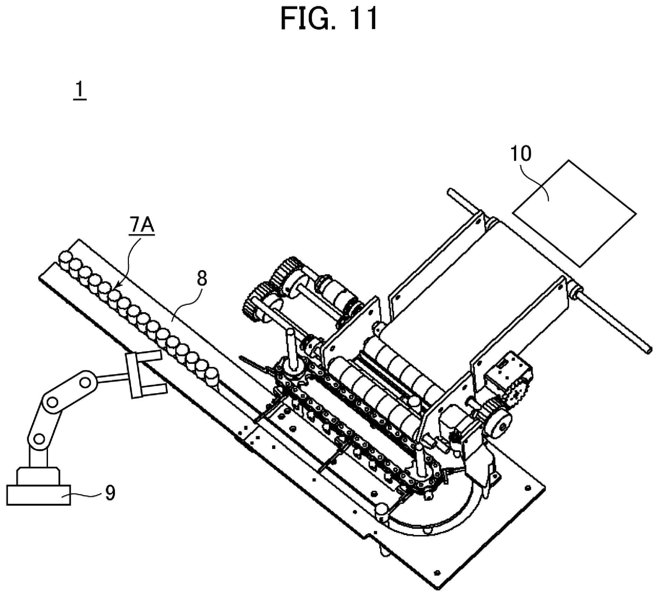

FIG. 11 is a perspective view of the article alignment mechanism 1 showing transported blood collection tubes 7A aligned in the groove 33. As shown in FIG. 11, an article alignment section 8 is provided downstream of the groove 33. The extrusion conveyance section 5 continues to push and convey the blood collection tube 7A pushed out from the groove input section 4 to the article alignment section 8. Thereafter, similarly, another blood collection tube 7A is fitted into the groove 33 and conveyed by the extrusion conveyance section 5, and this process is repeated. As shown in FIG. 11, the blood collection tubes 7A are successively pushed toward the back of the groove 33 by the extrusion conveyance section 5 and accumulated while being aligned in a uniform posture.

The blood collection tubes 7A aligned in a uniform posture are sorted at the article alignment section 8. For example, the cap 7A1 can be gripped by a gripper 9 (sorting mechanism) that moves on an orthogonal three-axis stage, the type can be recognized by a camera, and the tube can be transferred to a position corresponding to the type. However, the sorting method is not limited to this. Instead of an orthogonal three-axis stage, a multi-axis robot arm may be used.

Although an example has been described in which the blood collection tube 7A is pushed into the article alignment section 8 by the extrusion conveyance section 5, the present disclosure is not limited thereto. For example, the article alignment section 8 may be provided with another conveying mechanism. By means of this other conveying mechanism, the blood collection tube 7A that has reached the article alignment section 8 in an upright posture may be conveyed to the next process. In the next process, the blood collection tube 7A is, for example, gripped by a gripper in the same manner as described above, and sorting is performed.

Although an example has been described in which sorting is performed after alignment of the blood collection tube 7A, other processing such as analysis may be performed. In this manner, various processing methods can be considered for processing after the blood collection tube is pushed out from the groove input section 4. In any case, by bringing the blood collection tubes 7A, which were in random postures, into uniform postures on the groove 33, the subsequent processing can be performed with a simple mechanism and control.

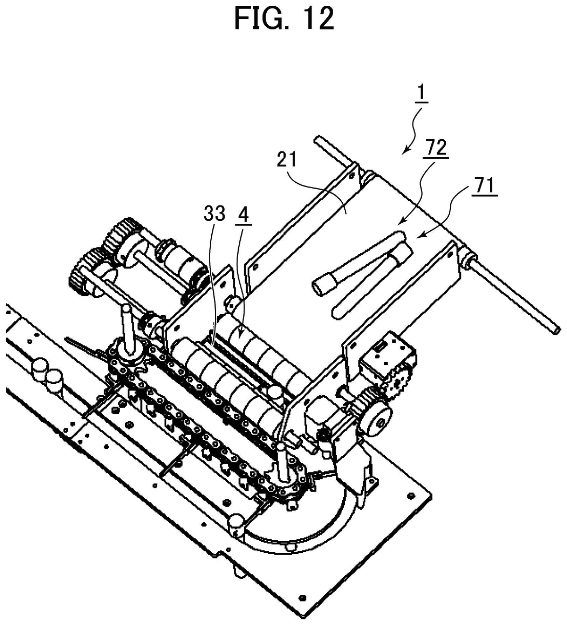

FIG. 12 is a perspective view of the article alignment mechanism 1 showing a state in which two blood collection tubes 71 and 72 are introduced substantially perpendicular to the groove 33 and close to each other. The shape and size of the blood collection tubes 71 and 72 are the same as those of the blood collection tube 7A. As shown in FIG. 12, the article alignment mechanism 1 can align blood collection tubes on the groove 33 as described above even when a plurality of blood collection tubes are introduced in random postures onto the belt conveyor 21.

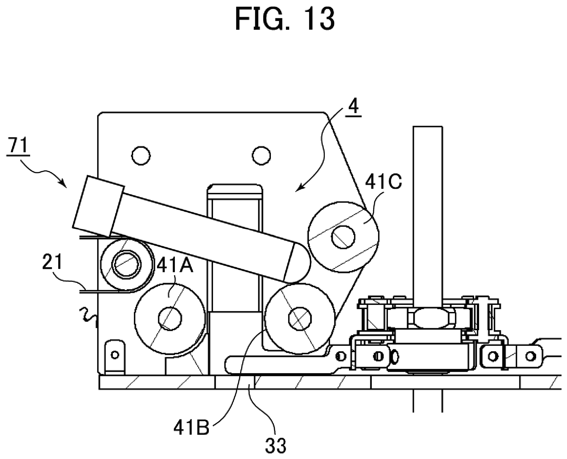

FIG. 13 is a side cross-sectional view in the vicinity of the groove input section 4 showing a state in which the blood collection tube 71 is placed on the roller 41B when introduced in a direction perpendicular to the groove 33. As shown in FIG. 12, when the blood collection tube 71 is introduced into the groove input section 4 substantially perpendicular to the groove 33, as shown in FIG. 13, the blood collection tube 71 may be placed on the roller 41B. At this time, if the roller 41B rotates inwardly, the blood collection tube 7A falls from the roller 41B and fits into the groove 33.

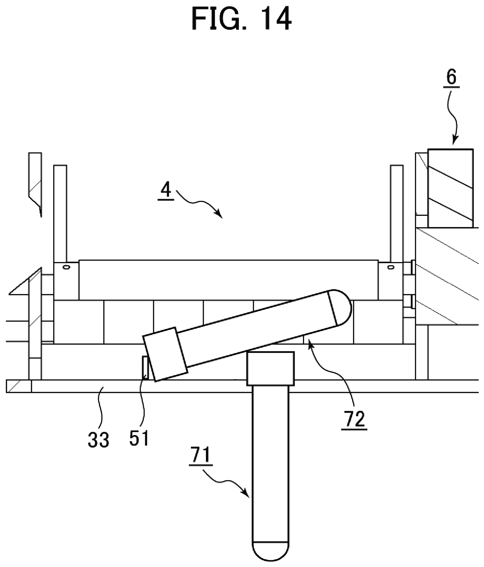

FIG. 14 is a front cross-sectional view of the groove input section 4 showing a state in which the blood collection tube 72 is placed on the blood collection tube 71 and the upper blood collection tube 72 is not fitted in the groove 33. As shown in FIG. 12, when the blood collection tubes 71 and 72 are close to each other and flow from the belt conveyor 21, they are introduced into the groove input section 4 almost simultaneously. In this case, as shown in FIG. 14, there is a possibility that the blood collection tube 72 rests on the blood collection tube 71 fitted in the groove 33 without being fitted in the groove 33. However, since the elastic portion 51 moves above the groove 33, the elastic portion 51 presses the blood collection tubes 71 and 72 and changes their position and posture. For example, in the situation of FIG. 14, the blood collection tube 72 is pressed to the right by the elastic portion 51, climbs over the blood collection tube 71, moves to the right, falls clockwise, and fits into the groove 33. Then, the blood collection tubes 71 and 72 are pushed out of the groove input section 4 and conveyed to the next process.

In this manner, the blood collection tube 7A may not immediately fit into the groove 33. However, the elastic portion 51 presses the blood collection tube 7A and changes its posture. As a result, the blood collection tube 7A fits into the groove 33, and the blood collection tubes 7A that have been fitted are sequentially transported out of the groove input section 4. In most cases, by repeating this process, the blood collection tubes can be gradually fitted into the groove 33 in an upright posture and transported. Additionally, the blood collection tube 7A not fitted in the groove 33 is blocked by the extrusion prevention section 6 and cannot pass through, remaining in the groove input section 4 until it fits into the groove 33.

Further, when blockage occurs with a plurality of blood collection tubes 7A in the groove input section 4, the blood collection tube 7A not fitted in the groove 33 is often in contact with any one of the belt conveyor 21 and the rollers 41A, 41B, and 41C. The position and posture of the blood collection tube 7A also change due to rotation of the belt conveyor 21 and the rollers 41A, 41B, and 41C, thereby facilitating fitting into the groove 33.

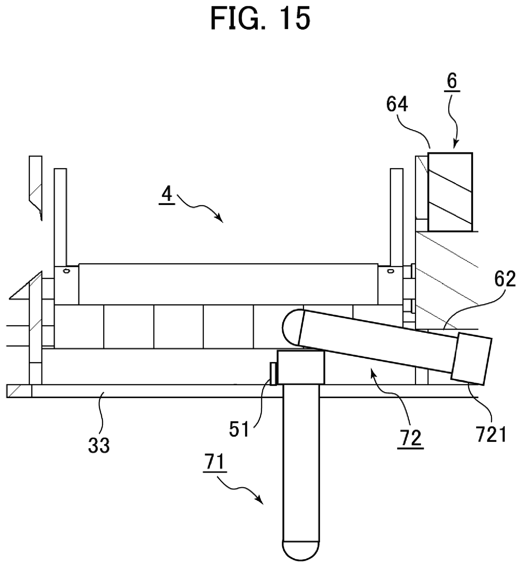

FIG. 15 is a front cross-sectional view of the groove input section 4 showing a state in which the blood collection tube 72 is placed on the blood collection tube 71 and the upper blood collection tube 72 is not fitted in the groove 33. The blood collection tube 72 is resting on the blood collection tube 71, but a cap 721 is tilted in the direction of travel. Furthermore, the cap 721 is blocked by the upper wall 62. As a result, even if the elastic portion 51 presses the blood collection tube 71, the blood collection tube 71 is blocked by the blood collection tube 72, and the positions and postures of the blood collection tubes 71 and 72 do not change further. In a situation where such blockage occurs, it is difficult to fit the upper blood collection tube 72 into the groove 33 even if the upper blood collection tube 72 is pressed in the advancing direction by the elastic portion 51.

By reversing the circulating direction of the extrusion conveyance section 5, the blockage can be resolved. When the circulating direction of the extrusion conveyance section 5 is reversed, the elastic portion 51 moves from right to left in FIG. 15. Then, the blood collection tube 72 moves to the left, rides over the blood collection tube 71, rotates counterclockwise, and can be fitted into the groove 33. Subsequently, by returning the circulating direction of the extrusion conveyance section 5 to its original direction, the blood collection tubes 71 and 72 are conveyed to the next process.

Other situations are conceivable in which the position and posture of the blood collection tubes do not change when the extrusion conveyance section 5 is circulated in the same direction. Such a situation is believed to occur when blood collection tubes accumulate on the advancing direction side (the right side in FIGS. 14 and 15) of the extrusion conveyance section 5, and at such time, space remains open on the side opposite to the advancing direction (the left side in FIGS. 14 and 15). Accordingly, when the circulating direction of the extrusion conveyance section 5 is reversed, the blood collection tubes have room to move into the vacant space, their positions and postures change at least somewhat, and they can be fitted into the groove 33. Even if they cannot be fitted into the groove 33 in a single attempt, by repeatedly changing the circulating direction of the extrusion conveyance section 5, it is believed that they can eventually be fitted into the groove 33.

Similarly, by also reversing the rotation directions of the belt conveyor 21 and the rollers 41A, 41B, and 41C (changing from inward-facing to outward-facing with respect to the groove 33), the positions and postures of the blood collection tubes are prevented from remaining the same, thereby promoting the fitting of blood collection tubes into the groove 33. Moreover, when the belt conveyor 21 and the rollers 41A, 41B, and 41C are rotating in reverse, blood collection tubes accumulated in the groove 33 receive an upward force, that is, they receive a force that separates the blood collection tubes from each other. For this reason, combined with pressing by the elastic portion 51, the positions and postures of the blood collection tubes become more likely to change.

The reverse rotation of the extrusion conveyance section 5, belt conveyor 21, and rollers 41A, 41B, and 41C is performed upon reaction of the detection sensor 64, and is performed periodically when no reaction occurs. When the blood collection tube 7A is fitted into the groove and passes through, the detection sensor 64 is in a detection state for only a very short time. However, as shown in FIG. 15, when a blood collection tube is blocked in the extrusion prevention section 6, the detection sensor 64 remains in a detection state for an extended period. For example, when the detection sensor 64 is in a detection state for 0.5 seconds, reverse rotation is initiated. In order to address blockage states that cannot be detected by the detection sensor 64, reverse rotation is performed at regular intervals even if the detection sensor 64 does not respond.

Although a method using a photoelectric sensor as the detection sensor 64 in the extrusion prevention section 6 has been described, the present disclosure is not limited thereto. For example, blockage can also be detected by measurement using a photoelectric sensor or an RGB camera from above the groove input section 4. This makes it possible to detect a wider variety of blockage states and to promptly address blockage. Although a configuration in which the detection sensor 64 is provided in the extrusion prevention section 6 has been shown, the detection sensor 64 may alternatively be provided in the groove input section 4. That is, the detection sensor 64 can be disposed at any position as long as it is capable of detecting the state of the blood collection tube 7A pushed out from the groove input section 4.

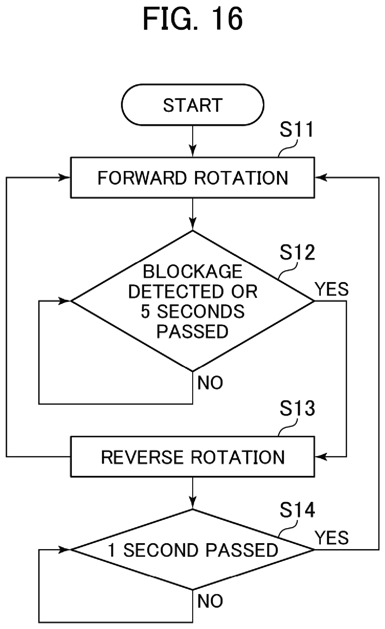

FIG. 16 shows a control sequence for the driving directions of the extrusion conveyance section, the rollers 41A, 41B and 41C, and the belt conveyor 21 by the control device 100. In step S11, when blockage is not detected by the detection sensor 64, the control device 100 sets the drive direction to forward rotation (first control mode). In step S12, the control device 100 determines whether blockage has been detected or whether 5 seconds have elapsed. When 5 seconds have elapsed (YES in step S12), the control device 100 proceeds to step S13 and reverses the drive direction (second control mode). However, if blockage is detected in step S12, the control device 100 proceeds to step S13 without waiting for the 5 seconds to elapse and reverses the drive direction. Thereafter, the control device 100 determines whether 1 second has elapsed since the drive direction was reversed. When one second has elapsed (YES in step S14), the control device 100 returns to step S11 and rotates forward again. The control device 100 repeats the above control.

While blockage occurs and reverse rotation control is performed frequently, the belt conveyor 21 (input amount adjustment mechanism) is also rotating in reverse, so introduction of blood collection tubes into the groove input section 4 is stopped or the amount introduced is reduced. Therefore, blockage in the groove input section 4 does not worsen. Although an example has been described wherein the driving of the belt conveyor 21 and the rollers 41A, 41B, and 41C is interlocked, the present disclosure is not limited thereto, and independent driving may also be employed. In this case, when the control device 100 (input amount adjustment mechanism) detects occurrence of blockage in the groove input section 4, the control device 100 can stop the belt conveyor 21 so as not to worsen the blockage in the groove input section 4, thereby stopping introduction of blood collection tubes into the groove input section 4.

### <Summary of First Embodiment>

As described above, the article alignment mechanism 1 of the present embodiment is an article alignment mechanism that aligns blood collection tubes (articles) having a cap (first diameter portion) and a container portion (second diameter portion), and includes an article holding section 3 having a groove 33 for holding the blood collection tube in an upright posture (predetermined posture) in which the cap is supported and the container portion is fitted, a groove input section 4 into which a plurality of blood collection tubes are introduced and which changes the posture of the blood collection tubes and introduces them into the groove 33, and an extrusion conveyance section 5 that presses the blood collection tubes introduced from the groove input section 4 into the article holding section 3, thereby changing the posture of blood collection tubes that are not fitted into the groove 33 in an upright posture and pushing the blood collection tubes held in the groove 33 out of the groove input section 4.

In this manner, the article alignment mechanism 1 of the present embodiment changes the posture of articles to the predetermined posture and conveys them, so that articles can be aligned at high speed while being less likely to cause blockage. Furthermore, since articles can be introduced into the article alignment mechanism in random postures, the labor required by the operator can be minimized.

### <Modification>

It should be noted that the present disclosure is not limited to the embodiments described above, and includes various modifications. For example, the examples described above have been described in detail to simply describe the present disclosure, and are not necessary to include all the described configurations. Furthermore, a part of one embodiment can be replaced with a configuration of another embodiment. Furthermore, a configuration of another embodiment can be added to a configuration of one embodiment. In addition, part of the configuration of each of the embodiments can be subjected to addition, deletion, or replacement with respect to part of the configuration of another embodiments.

### List of Reference Signs

1: article alignment mechanism, 2: article input section, 21: belt conveyor, 22: conveyor actuator, 23, 24: conveyor gear, 25: conveyor connection timing pulley, 26: torque limiter, 27: conveyor drive shaft, 28: conveyor driven shaft, 29A, 29B: conveyor side wall, 31: groove outer plate, 32: groove inner plate, 33: groove, 331: curved groove, 4: groove input section, 41A, 41B and 41C: roller, 42A, 42B and 42C: roller shaft, 43A, 43B: roller connection gear, 44A, 44B, 44C: roller connection timing pulley, 45, 46: side wall, 5: extrusion conveyance section, 51: elastic portion, 52: chain, 53A, 53B: sprocket, 6: extrusion prevention section, 61: side wall, 62: upper wall, 63: side shaft, 64: detection sensor, 65: rear side wall, 66: hole, 7A, 7B, 7C, 7D: blood collection tube, 7A1: cap, 7A2: container portion, 8: article alignment section

## Claims

1. An article alignment mechanism for aligning articles each having a first diameter portion having a predetermined diameter and a second diameter portion having a diameter smaller than that of the first diameter portion, comprising:
an article holding section having a groove for supporting the first diameter portion and holding the articles in a predetermined posture in which the second diameter portion fits;
a groove input section into which a plurality of the articles in a scattered state are introduced and which changes the posture of the articles and introduces the articles into the groove; and
an extrusion conveyance section that presses the articles introduced from the groove input section into the article holding section, thereby changing the posture of the articles in a posture different from the predetermined posture and pushing the articles held in the groove to a position outside the groove input section.

2. The article alignment mechanism according to claim 1,
wherein the extrusion conveyance section has an elastic portion that presses the articles and is deformed by a force received from the articles.

3. The article alignment mechanism according to claim 1, further comprising
an extrusion prevention section that prevents passage of, among the articles pushed out from the groove input section, the articles that fail to fit into the groove.

4. The article alignment mechanism according to claim 1,
wherein the extrusion conveyance section has a first control mode in which the extrusion conveyance section is driven in a direction to push the articles to a position outside the groove input section, and a second control mode in which the extrusion conveyance section is driven in a direction opposite to the direction in the first control mode.

5. The article alignment mechanism according to claim 4, further comprising
a detection sensor that detects a state of the articles pushed out from the groove input section,
wherein the extrusion conveyance section switches between the first control mode and the second control mode based on the state of the articles acquired by the detection sensor.

6. The article alignment mechanism according to claim 1, further comprising
a detection sensor that acquires the state of the articles pushed out from the groove input section, and
an input amount adjustment mechanism that adjusts the amount of the articles introduced into the groove based on the state of the articles acquired by the detection sensor.

7. The article alignment mechanism according to claim 3,
wherein the extrusion prevention section has an upper wall section and a side wall section,
the articles held in the groove in the predetermined posture pass through without contact with the upper wall section and the side wall section, and
the articles that fail to be held in the groove in the predetermined posture are prevented from passing through the extrusion prevention section by contact with the upper wall section or the side wall section.

8. The article alignment mechanism according to claim 7,
wherein the side wall section comprises:
a side wall having a shape along a portion of one side of the groove; and
a shaft disposed on an opposite side of the side wall across the groove and configured to be rotatable about its axis.

9. The article alignment mechanism according to claim 1,
wherein the groove input section comprises a plurality of rollers disposed on both sides of the groove, and
the articles are introduced into the groove while the posture of the articles is changed by rotation of the plurality of rollers.

10. The article alignment mechanism according to claim 1, further comprising
a belt conveyor that conveys the articles to the groove input section,
wherein the groove input section includes a roller disposed on one side of the groove, and
the belt conveyor and the roller are disposed on both sides across the groove, the articles being introduced into the groove while the posture of the articles is changed by rotation of the belt conveyor and the roller.

11. A blood collection tube sorting device comprising
a blood collection tube input section into which blood collection tubes in a scattered state are introduced,
a blood collection tube alignment mechanism that aligns the blood collection tubes, and
a sorting mechanism configured to sort the blood collection tubes aligned by the blood collection tube alignment mechanism,
wherein the blood collection tube alignment mechanism is the article alignment mechanism according to claim 1.
